# EUROPÄISCHE PATENTSCHRIFT

(11) **EP 4 678 514 B1**
(45) Veröffentlichungstag und Bekanntmachung des Hinweises auf die Patenterteilung: **29.04.2026**
(21) Anmeldenummer: 24187307.4
(22) Anmeldetag: 09.07.2024
(51) Int. Cl.: B62D 25/02, B62D 25/04, B62D 25/06

(54) **TÜRRING FÜR EINE KRAFTFAHRZEUGKAROSSERIE**
DOOR RING FOR A MOTOR VEHICLE BODY
ANNEAU DE PORTE POUR CARROSSERIE DE VÉHICULE AUTOMOBILE

(43) Veröffentlichungstag der Anmeldung: 14.01.2026
(73) Patentinhaber: Benteler Automobiltechnik GmbH, 33102 Paderborn (DE)
(72) Erfinder: FROST, Georg, 32839 Steinheim (DE); LAPSIEN, Rainer, 33142 Büren-Wewelsburg (DE)
(74) Vertreter: Osterhoff, Utz

(56) Entgegenhaltungen:
- CN-A- 115 056 856
- DE-A1- 102020 212 136
- US-A1- 2014 152 053
- US-A1- 2021 221 439

## Beschreibung

Die vorliegende Erfindung betrifft einen Türring für eine Kraftfahrzeugkarosserie gemäß den Merkmalen im Oberbegriff von Anspruch 1.

Aus dem Stand der Technik ist es bekannt Kraftfahrzeugkarosserien als sogenannte selbsttragende Karosserien herzustellen. Solche Kraftfahrzeuge werden von Verbrennungsmotoren, zunehmend in letzter Zeit jedoch auch von Elektromotoren, angetrieben.

Eine selbsttragende Kraftfahrzeugkarosserie weist hierzu einzelne Karosseriekomponenten auf, beispielsweise A-Säule, B-Säule, C-Säule, einen Kraftfahrzeugschweller, verschiedene Quer- und Längsträger, einen Scheibenrahmen, einen Dachrahmen, ein Dach sowie auch verschiedene Bodenbleche und sonstige Anbauteile.

Hierzu werden einzelne Bauteile umformtechnisch bearbeitet und im Anschluss miteinander gefügt, insbesondere verschweißt. Hierdurch entsteht eine selbsttragende Kraftfahrzeugkarosserie.

Aus dem Stand der Technik ist es bekannt, Bauteile bzw. Bauteilgruppen vorzufertigen. Insbesondere zur Aufnahme einer Kraftfahrzeugtür ist ein sogenannter Türring, im Englischen auch door ring genannt, bekannt.

Ein solcher Türring weist im vorderen Bereich eine A-Säule auf, im hinteren bzw. mittleren Bereich eine B-Säule zwischen Fahrertür und hinter der Fahrertür. Im Bereich des Dachs geht die A-Säule in einen, zumindest Teil des Dachrahmens über. Im unteren Bereich ist ein sogenannter Schweller angeordnet. Insgesamt ergibt sich somit ein umlaufender Ring, durch den ein Fahrgast in die spätere Kraftfahrzeugkarosserie einsteigen kann. Dieser Ring wird im späteren von einer Kraftfahrzeugtür verschlossen.

Im Querschnitt können dies Schalenbauteile sein, die mit weiteren Schließblechen oder ähnlichem gekoppelt werden. Der Türring ist jedoch zunächst ein Rohbauteil und kann im Sinne dieser Erfindung einschalig ausgebildet sein. Es können, wie gesagt, weitere Schließbleche im späteren Karosseriebau hinzukommen.

Beispielsweise ist aus der US 2021/221439 A1 die Herstellung eines Tailor Welded Blanks bekannt, bei dem bei vorbeschichtetem Material in den zu verschweißenden Stellen die Vorbeschichtung entfernt wird.

Ferner ist aus der CN 115 056 856 A ein Türring eines Kraftfahrzeuges bekannt.

Weiterhin ist aus der DE 10 2020 212 136 A1 ein Verfahren zur Herstellung eines warmgeformten und pressgehärteten Bauteils bekannt.

Aufgabe der vorliegenden Erfindung ist es, einen Türring bereitzustellen, welcher gezielt verbesserte Festigkeitseigenschaften, verbesserte Korrosionsschutzeigenschaften bei gleichzeitig günstigerer Herstellbarkeit mit sich bringt.

Die zuvor genannte Aufgabe wird mit einem Türring gemäß der Merkmale im Anspruch 1 gelöst.

Vorteilhafte Ausgestaltungsvarianten der vorliegenden Erfindung sind in den abhängigen Ansprüchen beschrieben.

Der Türring für eine Kraftfahrzeugkarosserie weist einzelne miteinander gekoppelte Bauteile auf, in Form einer A-Säule, einer B-Säule, eines Dachrahmenteils und eines Schwellerteils. Der Türring kann auch als Doppeltürring ausgebildet sein. In Kraftfahrzeuglängsrichtung ist dann auch noch hinter der Fahrertür bzw. hinter der Beifahrertür die jeweils folgende Tür mit aufgenommen. Mithin würde der Türring dann noch einen weiteren in Kraftfahrzeuglängsrichtung verlaufenden Teil des Dachrahmens, eine C-Säule, einen hinteren Schwellerteil sowie gegebenenfalls Teile eines dahinter befindlichen Radkastens oder Radhauses aufweisen.

Wie bereits eingangs erwähnt, ist dieser Türring zunächst im Querschnitt als einschaliges Bauteil zu sehen. Es können weitere Bauteile, Schließbleche oder ähnliches ergänzt werden.

Zumindest abschnittsweise zeichnet sich der Türring dadurch aus, dass er in zumindest einzelnen Bauteilen eine Festigkeit, insbesondere Zugfestigkeit Rm größer 1300 MPa, besonders bevorzugt größer als 1500 MPa und insbesondere größer als 1800 MPa aufweist. Die Zugfestigkeit Rm sollte jedoch 2200 MPa nicht überschreiten. Ermöglicht wird dies durch Verwendung eines gehärteten Stahls für wenigstens eines der miteinander gekoppelten Bauteile des Türrings. Der Stahl kann entweder ein ultrahochfester Stahl sein, der durch ein Kaltumformverfahren hergestellt ist. Der Stahl kann insbesondere jedoch auch ein härtbarer Stahl, beispielsweise ein Mangan-Bor-Stahl sein, welcher mittels Warmumformen und Presshärten umgeformt wird. Das Bauteil weist dann zumindest bereichsweise die zuvor beschriebenen Zugfestigkeiten in harten bzw. festen Bereichen auf. Ein jeder Bereich ist insbesondere durch ein Bauteil ausgebildet. Als Bauteil ist somit eine A-Säule (bzw. Dachrahmen), eine B-Säule, ein Schweller zu verstehen. Die einzelnen Bauteile sind aus voneinander verschiedenen Stahlgüten hergestellt. So können einzelne Bauteil aus härtbaren Mangan-Bor-Stählen, hergestellt sein. Andere Bauteile können aus herkömmlichen Stahlsorten hergestellt sein. Die Bauteile sind, wie nachfolgend beschrieben, mit einer Korrosionsschutzschicht versehen und miteinander laserverschweißt.

Dort, wo eine vollständige Härtung für höchste Zugfestigkeit beabsichtigt sind, nämlich oberer Bereich der B-Säule (inkl. Dachrahmenstummel) und oberen Bereiche der A-Säule und Dachrahmen wird eine presshärtbare Stahllegierung (Stahl A bis D) verwendet, während vor allem als Deformationszonen bei einem Seitenaufprall wirkende Bereiche bzw. Bauteile wie der Schweller, die untere Fußbereich der B-Säule sowie Schwellerstummel bzw. unterer Teil der A-Säule aus nicht bzw. kaum härtbaren Stahl (Stahl E oder F) bestehen mit Eine Zugfestigkeit unterhalb 1000 MPa (z.B. 500 bis 800 MPa). Die chemischen Analysen der einzelnen erfindungsgemäß bevorzugt verwendbaren Stahllegierungen (Stahl A bis F) gemäß nachfolgender Tabelle enthält Angaben in Masseprozent und weist als Rest Eisen und beim Erschmelzen unvermeidbare Verunreinigungen auf. Für vorzugsweise vorhandene Verstärkungspatches bzw. Verstärkungsbleche an A-Säule und B-Säule kann ebenfalls einer der Stähle A bis D verwendet werden, wobei ganz besonders bevorzugt Stahl C oder D zum Einsatz kommen, da hier eine Zugfestigkeit oberhalb 1900 MPa nach dem Presshärten erreichbar ist, während die Stähle A und B eine Zugfestigkeit knapp oberhalb 1400 MPa nach dem Presshärten aufweisen

Der Türring hat dann weitere Bereiche bzw. gekoppelte Bauteile, die eine Zugfestigkeit Rm kleiner 1000 MPa, insbesondere kleiner als 850 MPa haben. Die Zugfestigkeit Rm sollte jedoch mindestens 350 MPa, besonders bevorzugt mindestens 500 MPa, auch in diesen, relativ gesehen, weicheren Bereichen aufweisen.

Ferner weisen der Türring bzw. die Stahlbauteile eine Korrosionsschutzschicht auf, welche vorzugsweise bei allen zum Türring gekoppelten Bauteilen dieselbe Beschichtung einschließlich gleicher Schichtdicke und spezifischem Schichtgewicht aufweisen. Alternativ können Schweller und B-Säulenfuß eine höherwertige, dickere und/oder schwerere Korrosionsschutzschicht aufweisen als A-Säule, Dachrahmen oder obere B-Säule.

Erfindungsgemäß ist nunmehr vorgesehen, dass zumindest zwei der einzelnen Bauteile untereinander laserverschweißt sind mit einem Überlappstoß, zumindest in einzelnen Bereichen mit einem Überlappstoß. Erfindungsgemäß ist die Korrosionsschutzschicht auch zwischen den sich überlappenden Lagen ausgebildet. Durch die Überlappung bzw. den Überlappstoß ist es zunächst möglich, dass die Bauteile einfach und effizient miteinander gefügt sind sowie unter Kompensation eventueller Bauteiltoleranzen. Die Überlappung gleicht Längenunterschiede aus.

Das Verschweißen zumindest zweier Bauteile erfolgt dann erfindungsgemäß in zumindest einem Bereich mittels Überlappung und Laserschweißen.

Es können verschiedene Festigkeiten eingestellt werden. Alternativ oder ergänzend können auch in den Bereichen verschiedener Festigkeit voneinander verschiedene Wandstärken eingesetzt werden, um somit ebenfalls voreinander verschiedene Steifigkeitseigenschaften des Türrings herzustellen.

Am warmumgeformten Bauteil ist die Korrosionsschutzschicht insbesondere auf Basis einer Aluminium-Silizium-Eisenbasis ausgebildet. Eine solche Korrosionsschutzschicht kommt insbesondere bei einem warmumzuformenden und presszuhärtenden Bauteil zum Einsatz. Die Bauteile sind somit vorbeschichtet. Die AlSi-Beschichtung kann eine Schichtdecke von 10 µm bis 45 µm aufweisen, insbesondere aber ist ein relativ niedriges Schichtgewicht von 20 g/m² bis 90 g/m² je Blechseite und/oder eine Schichtstärke von 10 µm bis 25 µm aufgebildet, um den negativen Einfluss des Aluminiums und intermetallischer Phasen auf die Schweißverbindung zu reduzieren. Wird das Bauteil auf über Austenitisierungstemperatur, mithin auf über Ac3-Temperatur erwärmt, findet ein Durchlegieren der Vorbeschichtung statt. Im Falle eines kaltumgeformten Bauteils, beispielsweise eines UHSS-Bauteils, kann eine zinkbasierte Korrosionsschutzschicht eingesetzt werden.

Das erfindungsgemäße Laserschweißen wird insbesondere als Laser-Remote-Schweißung durchgeführt. Hierzu werden besonders bevorzugt drahtfreie Schweißnähte mindestens entlang einer Linie bzw. Stoßbereichs ausgebildet. Da die Laserschweißnähte erfindungsgemäß erst nach dem Warmformen und Presshärten von wenigstens einigen der Bauteile bzw. Fügepartner erstellt sind, sind diese am fertigen Türring als schweißbedingten Wärmeeinflusszone durch Messung des Härteverlaufs quer zu Stoßbereichen erkennbar und unterscheidbar von denjenigen Schweißverbindungen, die schon auf Ebene von unverformten Blechplatinen erstellt und erst anschließend einem Warmformprozess durchlaufen. Insbesondere weist der erfindungsgemäße Türring im Stoßbereich einen charakteristischen unstetigen Härteverlauf mit Härtespitze und davon beidseitig abfallenden Härtesenken auf, die sich aus dem Wärmeeintrag des Schweißlaserstrahls als eine Art kleinflächiges lokales Anlassen ergibt. Der Härteabfall zumindest im Bauteil bzw. Bereich aus härtbarem Stahl beträgt jedoch insbesondere weniger als 30% oder weniger als 25% im Vergleich zu pressgehärteten Bereichen außerhalb der Wärmeeinflusszone.

Gerade in Radien oder kurvigen Stoßbereichen kann zu einem besseren Spalt- oder Toleranzausgleich eine drahthaltige Schweißnaht verwendet werden. Unter drahthaltig ist insbesondere ein Schweißzusatzwerkstoff zu verstehen.

Alternativ oder ergänzend zu einer drahthaltigen Schweißnaht kann eine oszillierende oder rotierende Bewegung der Laserstrahl mit oder ist-Spalt-geregelter gesteigerter Schmelzleistung durchgeführt werden.

Der Überlappbereich ist von einem Bauteil zum weiteren Bauteil kleiner 25 mm, besonders bevorzugt kleiner 20 mm, insbesondere kleiner 15 mm und ganz besonders bevorzugt kleiner 10 mm ausgebildet. Der Überlappbereich sollte jedoch mindestens 2 mm, besonders bevorzugt 5 mm betragen.

Hier hat sich ein weiterer erfindungsgemäßer Vorteil ergeben. Bei einer Überlappung von zwei Lagen, wird eine Schweißung von der Oberfläche einer Lage kommend, durchgeführt, die dann die obere Lage vollständig durchgreift und in die darunter befindliche Lage eindringt. In einem solchen Fall entsteht eine im Wesentlichen zur Oberfläche senkrecht orientierte Schweißwurzel. Diese Schweißwurzel durchgreift besonders bevorzug weniger als 90 %, insbesondere weniger als 80 % die zweite Lage. Dies hat zum einen fertigungsbedingt den Vorteil, dass eine gute Verschweißung der zwei Lagen in diesem Bereich stattfindet. Ein weiterer Vorteil ist, dass die Korrosionsschutzschicht auf der Unterseite der zweiten Lage nicht von einer die zweite Lage vollständig durchgreifenden Schweißnaht angegriffen ist. Auf der Rückseite der Schweißnaht ist somit eine gute Korrosionsschutzeigenschaft gegeben. Im Bereich des Durchgreifens der Schweißnaht bzw. Schweißwurzel von erster Lage zu zweiter Lage und der zwischen den Lagen sich befindlichen Korrosionsschutzschicht ist ebenfalls ein besonders guten Korrosionsschutzverhalten gegeben.

Erfindungsgemäß hat sich weiterhin gezeigt, dass die Oberseite der Schweißnaht, je nach verwendeter Korrosionsschutzschicht zu einem Aufschmelzen bzw. Vermengen mit dieser Korrosionsschutzschicht kommt und gleichsam dann nach Abschluss des Laserschweißverfahrens die Oberseite der Schweißnaht ebenfalls korrosionsgeschützt ist.

Alternativ zu der zuvor beschriebenen, im Wesentlichen zur Oberfläche rechtwinkligen Schweißnaht, wäre vorgesehen, dass eine schräge Schweißwurzel eingebracht ist. Von einer sich überlappenden Lage beginnt die Stirnseite und erste Lage im Querschnitt durchgreifend sich schräg in die zweite Lage erstreckend. Insbesondere findet dies in einem Winkel zwischen 30° und 45°, insbesondere 20° bis 50° statt.

Ein Vorteil hierbei ist, da die Stirnkante mitunter frei von Beschichtungsmaterial der Korrosionsschutzschicht ist, dass ein geringerer Eintrag von Korrosionsschutzschichtmaterial in die Schweißnaht selbst erfolgt. Die Güte der Schweißnaht ist somit verbessert. Nach erfolgter Schweißung kann dann die Oberseite der Schweißnaht mit einer abschließenden Korrosionsschutzschicht versehen werden. Zudem lassen sich Schweißzusatzstoffe, insbesondere Draht bei derartiger Schweißnahtgestaltung einsetzen, was ein Überbrücken größerer Schweißspalte erlaubt, ohne dass extra ein stärkeres Aufschmelzen der oberen, dem Laserstrahl zugewandten Lage beim Schweißen erfolgen und/oder oszillierende Laserstrahlen oder adaptive Leistungen eingesetzt werden müssen.

Ein weiterer Vorteil des eingesetzten Laserschweißverfahrens ist, dass die Schweißnaht nicht parallel bzw. transversal zur Längsachse der zwei überlappenden Bereiche verlaufen muss. Insbesondere kann dies nach dem Prinzip einer Welle oder Zickzacklinie bzw. sägezahnförmig verlaufen. Hierdurch verbessert ist der Wärmeintrag in das Bauteil bzw. die Festigkeit der Schweißverbindung, da relativ gesehen ein größerer Bereich gefügt ist, was die Festigkeit im Rahmen der Schweißverbindung weiter verbessert. Entstehende Spannungen und/oder Wärmeeinflüsse werden durch einen wellenförmigen Verlauf der Schweißnaht besser im Material kompensiert. Im Crashfall werden lokale Spannungsspitzen und eine Belastung senkrecht zur Schweißnaht reduziert bzw. in eine eher schräge Belastung verwandelt.

Im Sinne der Erfindung kann weiterhin ein Verstärkungspatch eingebracht sein. Hier kommt dann eine Doppellage zur Ausbildung, beispielsweise kann dies im Bereich der A-Säule oder auch der B-Säule sein, beispielsweise im Bereich von Türanbindungspunkten bzw. crashgefährdeten Bereichen. Ein Verstärkungspatch kann jedoch beispielsweise auch im Bereich des Schwellers eingebracht sein. Der Verstärkungspatch ist besonders bevorzugt punktgeschweißt. Der Verstärkungspatch kann dann beispielsweise mit warmumgeformt und pressgehärtet werden. Alternativ ist es auch möglich, z. B. bei einem kaltumgeformten Bauteil den Verstärkungspatch später einzubringen, wobei der Verstärkungspatch selbst ebenfalls separat geformt ist.

Der Verstärkungspatch kann auch zwei sich benachbarte Bauteile übergreifen. Somit kann der Verstärkungspatch eine zusätzliche Verstärkung im Bereich der Fügung zwischen zwei Bauteilen sein.

Im Sinne der Erfindung ist es auch möglich, eine Dreifachlage zu durchschweißen. Hier liegen dann nicht nur zwei aneinander angrenzende Bauteile aufeinander, sondern im Querschnitt sind drei Lagen ausgebildet. Auch in diesem Fall werden bevorzugt weniger als 95 %, insbesondere weniger als 90 %, besonders bevorzugt weniger als 80 % der Wanddicke der untersten Lage durchgeschweißt. Dies bietet wiederum den Vorteil, dass die Korrosionsschutzschicht auf der Unterseite der untersten Lage nicht gestört wird.

Weitere Vorteile, Merkmale, Eigenschaften und Aspekte der vorliegenden Erfindung sind Gegenstand der nachfolgenden Beschreibung. Bevorzugte Ausgestaltungsvarianten werden in schematischen Figuren dargestellt. Diese dienen dem einfachen Verständnis der Erfindung. Es zeigen:
- Figur 1: eine Türring,
- Figur 2: eine Rückansicht zu der in Figur 1 dargestellten Variante,
- Figur 3: eine Detailansicht der B-Säule,
- Figur 4: eine weitere Detailansicht der B-Säule,
- Figur 5: eine weitere Ausgestaltungsvariante eines erfindungsgemäßen Türringes,
- Figur 6: einen Anbindungsbereich in Querschnittsansicht.
- Figur 7: eine weitere Ausgestaltungsvariante der mittels Laserschweißen hergestellten Schweißnaht,
- Figur 8: eine weitere Ausgestaltungsvariante der vorliegenden Erfindung,
- Figur 9: eine weitere Ausgestaltungsvariante der mittels Laserschweißen hergestellten Schweißnaht,
- Figur 10: einen Schweißnahtverlauf in seiner Längsrichtung,
- Figur 11: Alternative zu Figur 10.

In den Figuren werden für gleiche oder ähnliche Bauteile dieselben Bezugszeichen verwendet, auch wenn eine wiederholte Beschreibung sowie Darstellung aus Vereinfachungsgründen entfällt.

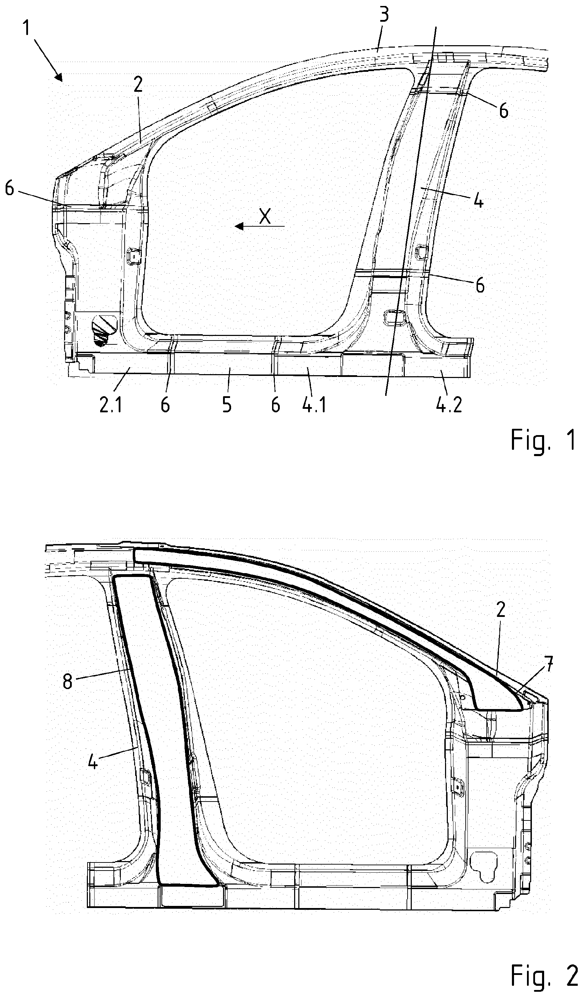

Figur 1 zeigt einen Türring 1. Der Türring 1 weist eine A-Säule 2 auf, einen Teil eines Dachrahmens 3, eine B-Säule 4 sowie einen Teil eines Schwellers 5. Dieser Türring 1 kann im Querschnitt zunächst einschalig ausgebildet sein. Es können im Bereich der A-Säule 2, im Bereich der B-Säule 4, im Bereich des Dachrahmens 3 aber auch im Bereich des Schwellers 5 jeweils Schließbleche bzw. schließende Halbschalen oder auch ein einstückig aus einer maßgeschneidert geschweißten Blechplatine (kurz:TWB) erstellter Innentürring aufgebracht sein, so dass sich im Querschnitt zumindest teilweise, insbesondere vollständig, ein Hochprofil ergibt. Gegenstand dieser Erfindung ist maßgeblich die einschalige Lage, wie sie Figur 1 dargestellt ist. Der B-Säulenfuß kann, wie hier dargestellt, beispielsweise T-förmig ausgebildet sein, so dass sich ein jeweiliger Schwellerstummel 4.1 bzw. 4.2 ergibt. Gleiches gilt für die A-Säule 2 hier kann sich auch ein Schwellerstummel 2.1 ergeben. Der Dachrahmen 3 kann in Kraftfahrzeuglängsrichtung X nach hinten überstehen. Hier sind verschiedene Anbindungsbereiche 6 bzw. Überlappbereiche zwischen den Bauteilen ausgebildet. Beispielsweise jeweils bei den Anbindungsbereichen gemäß Bezugszeichen 6 sind die einzelnen Bauteile entweder in sich unterteilt und mittels einer Überlappung verschweißt. Anderenfalls sind jeweils zwei benachbarte Bauteile miteinander verschweißt. Im Sinne dieser gesamten Offenbarung gilt für den oberen Bereich der A-Säule 2 sowie den Dachrahmen 3 die Tatsache, dass A-Säule 2 in diesem Bereich und Dachrahmen 3 ein Bauteil sein können. Mithin erstreckt sich die A-Säule 2 bis zur B-Säule 4. Es können jedoch auch A-Säule 2 und Dachrahmen 3, wie in Figur 1 dargestellt, zwei Bauteile sein, die miteinander verschweißt sind.

Figur 2 zeigt eine Rückansicht zu der in Figur 1 dargestellten Variante. Hier ist ein Verstärkungspatch 7 von hinten innen im Bereich der A-Säule 2 angebracht. Dieses Verstärkungspatch 7 ist über einen großen Teil mit der A-Säule 2 verschweißt. Ferner ist ein Verstärkungspatch 8 an der Rückseite bzw. in der B-Säule 4 angebracht.

Während das Verstärkungspatch 7 der A-Säule gemeinsam mit der A-Säule selbst in einem Umformschritt pressgeformt, insbesondere pressgehärtet wurde, kann das Verstärkungspatch 8 der B-Säule auch erst nach dem Umformen eingebracht worden sein. Dies gibt vor allem dann, wenn es wie dargestellt bis in den T-förmigen B-Säulenfuß hineinragend ausgebildet und angeordnet ist, so dass es die Schweißnaht im Anbindungsbereich 6 überragt.

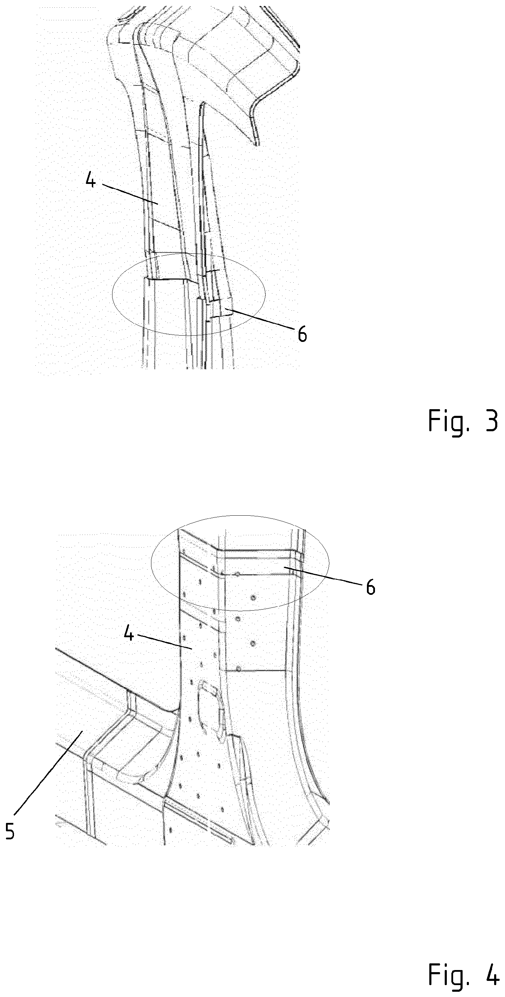

Figuren 3 und 4 zeigen jeweils eine Detailansicht der B-Säule 4. Hier ist eine Überlappung dargestellt, auf die nachfolgend weiter eingegangen wird. Insbesondere in der Figur 4 sind weitergehende Punktschweißungen eingezeichnet. Diese können zur Kopplung mit dem Verstärkungspatch 8 dienen.

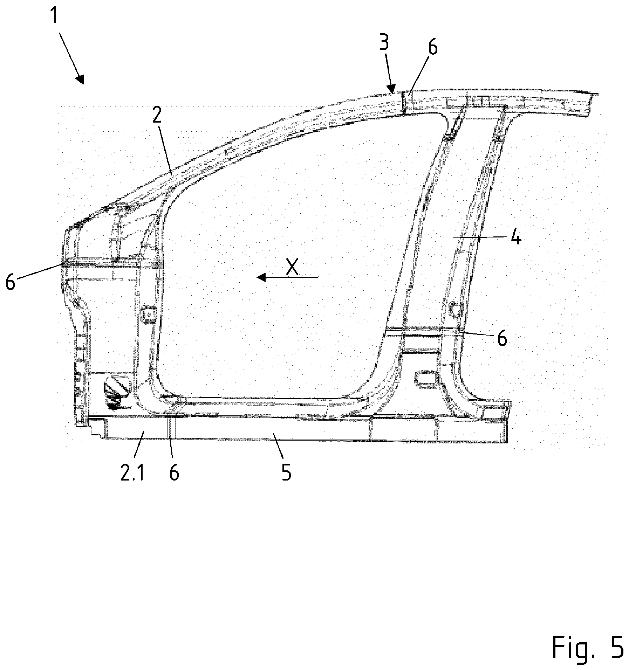

Figur 5 zeigt eine weitere Ausgestaltungsvariante eines erfindungsgemäßen Türringes 1. Hier sind jeweilige Übergangsbereiche 6 bzw. Anbindungsbereiche zwischen zwei Bauteilen gezeigt. Der Kraftfahrzeugschweller 5 ist hier sich über einen Großteil in Kraftfahrzeug-X-Richtung erstreckend und am vorderen Bereich an einer A-Säule 2 angebunden. Hier ergibt sich ein kleiner A-Säulenstummel 2.1, die B-Säule 4 mit dem unteren Fußbereich durch den Schweller 5 direkt mit ausgebildet und ist dann oberhalb des B-Säulenfußes gekoppelt. Die B-Säule 4 umfasst im Bereich des Dachrahmens 3 ein oberes T-Stück. Dies kann auch als Dachrahmenstummel an der B-Säule 4 bezeichnet werden. Dieser ist dann in einem Anbindungsbereich 6 an die A-Säule 2 gekoppelt.

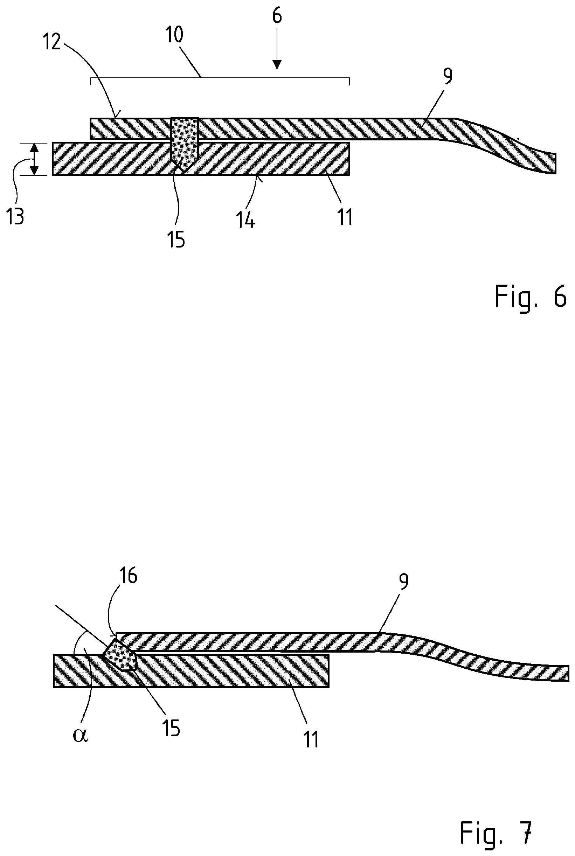

Figur 6 zeigt nunmehr einen Anbindungsbereich 6 in Querschnittsansicht. Eine obere Lage 9 bzw. erste Lage eines Bauteils überlappt dabei in einem Überlappbereich 10. Eine untere Lage 11 bzw. zweite Lage eines zweiten Bauteils. Der Überlappbereich 10 weist eine Erstreckung quer zur Bildebene von weniger als 25 mm auf. Eine Schweißnaht 15 bzw. Schweißwurzel wird von einer Oberseite 12 der oberen Lage 9 eingebracht. Sie erstreckt sich mit einer Tiefe 13. Die erste bzw. obere Lage 9 vollständig durchgreifend in die zweite Lage. In der unteren Lage 11 ist jedoch besonders bevorzugt weniger als 95 %, insbesondere weniger als 90 % die zweite Lage durchgreifend. Dies bietet den Vorteil, dass eine Oberflächenbeschichtung an der Unterseite 14 der unteren Lage 11 nicht durch ein Durchbrennen der Schweißnaht 15 beeinflusst wird bzw. Aluminium aus der Beschichtung der Unterseite 14 sich beim Schweißen nicht mit dem Schweißbad vermischt. Die Korrosionsschutzschicht auf der Unterseite der Lage bleibt dann vollständig erhalten. Insbesondere bietet diese Möglichkeit, wonach die Schweißnaht 15 bzw. Schweißwurzel im Wesentlichen senkrecht zur Oberfläche der Lagen ausgebildet ist, die Möglichkeit nicht nur eine lineare verlaufende Schweißnaht 15 auszubilden, sondern die Schweißnaht 15 kann in ihrem Längsverlauf beispielsweise wellenförmig, zickzackförmig oder auch nach dem Prinzip Sägezahlprofils ausgebildet sein.

Die jeweilige Korrosionsschutzschicht ist hier nicht detailliert dargestellt, jedoch auch in dem Überlappbereich 10 zwischen den Lagen 11, 17 ausgebildet, so dass auch der Überlappbereich 10 korrosionsgeschützt.

Figur 7 zeigt eine weitere Ausgestaltungsvariante der erfindungsgemäß mittels Laserschweißen hergestellten Schweißnaht 15. Die Schweißnaht 15 ist hier schräg eingebracht. Insbesondere mit einem Winkel α, der bevorzugt im Bereich von 30° bis 45° liegt zu einer jeweiligen Oberfläche der Lagen 11, 17 zueinander. Hierdurch ergibt sich der Vorteil, dass die Schweißnaht 15 von einer Stirnkante 16 der oberen Lage kommend eingebracht wird. Die Stirnkante 16 kann auch als Schnittkante bezeichnet sein. Eine eventuelle Korrosionsschutzschicht ist an dieser Stirnkante 16 zunächst nur in verringertem Maße oder gar nicht ausgebildet. Es erfolgt keine Einbringung von Korrosionsschutzschicht in die Schweißnaht 15 selbst, was die Güte der Schweißnaht 15 und damit die herzustellende Festigkeit weiter verbessert.

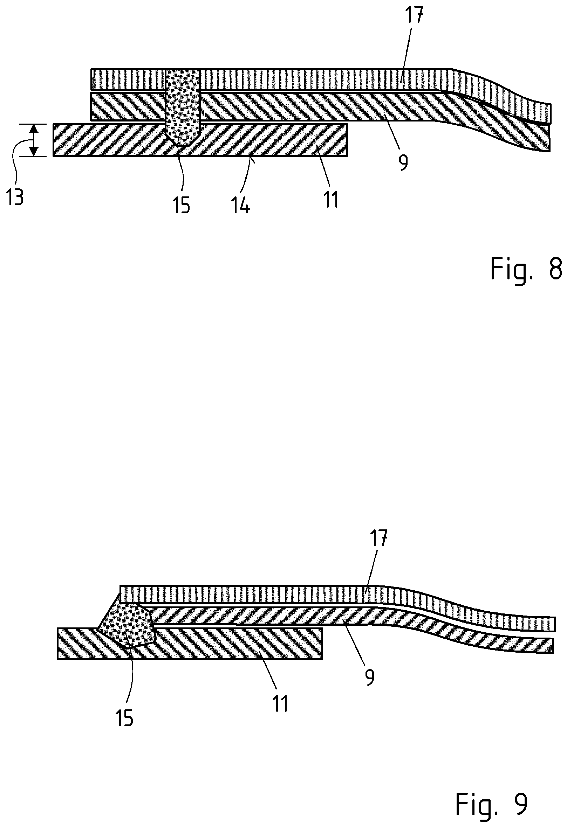

Figur 8 zeigt eine weitere Ausgestaltungsvariante der vorliegenden Erfindung. Hier ist nicht wie in Figur 6 und 7 dargestellt eine Doppellage ausgebildet eine Dreifachlage. Es ist noch eine weitere Lage 17, beispielsweise ein Verstärkungspatch oder ähnliches angeordnet. Die auf die Bildebene dargestellt unterste Lage 11 ist wiederum in ihrer Tiefe weniger als 95 %, bevorzugt weniger als 90 % von der Schweißnaht 15 durchgriffen. Eine Oberflächenbeschichtung an der Unterseite ist somit nicht von der Schweißnaht 15 beschädigt.

Analoge Argumentationen zu Figur 7 gilt auch zu Figur 9. Hierbei ist die Schweißnaht 15 eingebracht schräg zur Oberfläche und verbindet die drei Lagen miteinander.

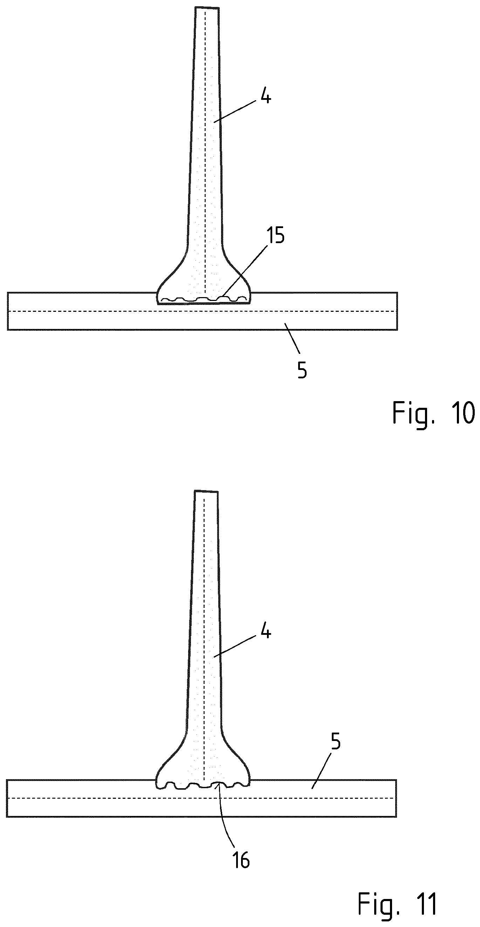

Figur 10 zeigt exemplarisch einen Schweißnahtverlauf in seiner Längsrichtung. Dieser ist nach dem Prinzip einer Wellenform ausgebildet. In diesem Fall ist eine B-Säule 4 bzw. ein B-Säulenfuß an einen Schweller 5 angebunden. Die Schweißnaht 15 ist nach dem Funktionsprinzip im Querschnitt gemäß Figur 6 eingebracht und kann einen wellenförmigen Verlauf aufweisen. Damit erhöht sich die Länge und damit auch die effektive Querschnittsfläche der Schweißnaht, wodurch vorteilhafterweise auch eine verringerte lokale Spannungskonzentration bei crashbedingten bzw. mechanischen Beanspruchungen einhergeht.

Figur 11 zeigt eine dazu alternative Ausgestaltungsvariante. Hier ist an der Unterseite 14 eine Stirnkante 16 des B-Säulenfußes dargestellt. Dieser weist selbst dann einen wellenförmigen Verlauf auf. Die Schweißnaht 15 ist ausgebildet nach dem Funktionsprinzip im Querschnitt gemäß Figur 7.

Die verwendeten Stahlsorten können nachfolgend exemplarisch zum Einsatz kommen und für alle Varianten dieser Erfindung eingesetzt werden können. Insbesondere können verschiedene Stahlsorten miteinander kombiniert werden in einer Tailored Welded Blank. Entsprechende Festigkeitsbereiche zu harten bzw. weichen Bereichen bzw. festen oder duktilen Bereichen können der Tabelle entnommen werden. Alle Legierungsbestandteile sind angegeben in Gew.-%, wobei zu der jeweiligen härtbaren Stahllegierung dann Rest Eisen sowie erschmelzungsbedingte Verunreinigungen hinzukommen.

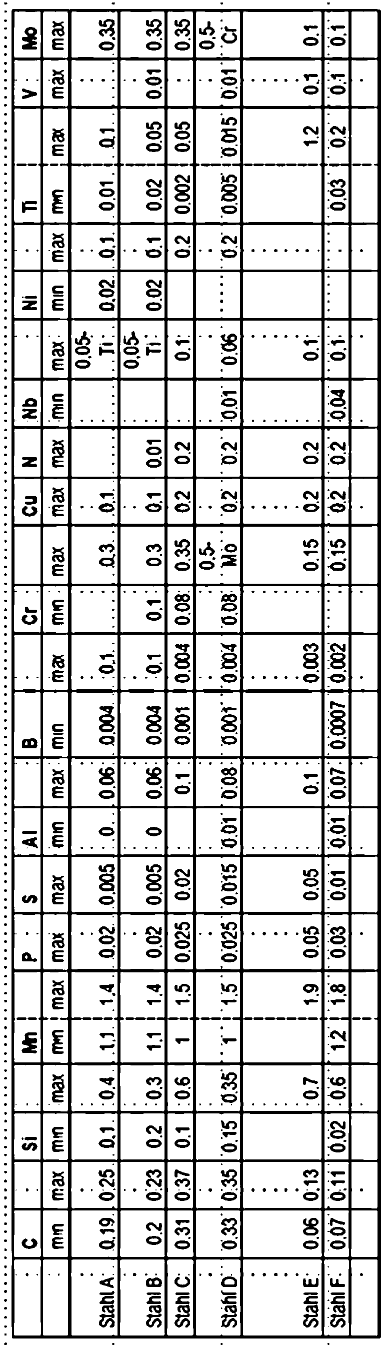

### Bezugszeichen:

- 1 -: Türring
- 2 -: A-Säule
- 2.1 -: Schwellerstummel
- 3 -: Dachrahmen
- 4 -: B-Säule
- 4.1 -: Schwellerstummel
- 4.2 -: Schwellerstummel
- 5 -: Schweller
- 6 -: Anbindungsbereich
- 7 -: Verstärkungspatch zu 2
- 8 -: Verstärkungspatch zu 4
- 9 -: obere Lage
- 10 -: Überlappbereich
- 11 -: untere Lage
- 12 -: Oberseite
- 13 -: Tiefe
- 14 -: Unterseite zu 11
- 15 -: Schweißnaht
- 16 -: Stirnkante
- 17 -: weitere Lage

- X -: Kraftfahrzeuglängsrichtung
- α -: Winkel

## Patentansprüche

1. Türring (1) für eine Kraftfahrzeugkarosserie aufweisend einzelne miteinander gekoppelte Bauteile in Form einer A-Säule (2), einer B-Säule (4), eines Dachrahmenteils (3) und eines Schwellerteils (5), wobei mindestens in einem Bereich eine Zugfestigkeit Rm größer 1300 MPa ausgebildet ist und in einem anderen Bereich eine Zugfestigkeit Rm kleiner 1000 MPa ausgebildet ist, wobei der Türring (1) eine Korrosionsschutzschicht aufweist, wobeidie Bauteile in den Bereichen wenigstens zwei verschiedene Stahlgüten umfassen und laserverschweißt sind mit einer Überlappung, **dadurch gekennzeichnet, dass** die Korrosionsschutzschicht zwischen den sich überlappenden Lagen (9, 11) ausgebildet ist und dass die Überlappung kleiner 25 mm ist.

2. Türring (1) nach Anspruch 1, **dadurch gekennzeichnet, dass** wenigstens eines der gekoppelten Bauteile des Türrings (1) als Warmumform- und Presshärtebauteil hergestellt ist, insbesondere in einem Pressenhub.

3. Türring (1) nach Anspruch 1 oder 2, **dadurch gekennzeichnet, dass** ein hochfester Bereich eine Zugfestigkeit Rm größer gleich 1800 MPa aufweist.

4. Türring (1) nach einem der vorgenannten Ansprüche, **dadurch gekennzeichnet, dass** weiche Bereich ausgebildet sind, welche eine Zugfestigkeit Rm kleiner 1000 MPa, vorzugsweise kleiner 850 MPa aufweisen und/oder dass weiche Bereiche eine geringere Wandstärke aufweisen.

5. Türring (1) nach einem der vorgenannten Ansprüche, **dadurch gekennzeichnet, dass** die Korrosionsschutzschicht auf einer AlSiFe-Basis ausgebildet ist oder dass die Korrosionsschutzschicht auf eine Zn-Basis ausgebildet ist.

6. Türring (1) nach einem der vorgenannten Ansprüche, **dadurch gekennzeichnet, dass** die einzelnen Bauteile laserverschweißt zum Türring sind.

7. Türring (1) nach einem der vorgenannten Ansprüche, **dadurch gekennzeichnet, dass** die Schweißnaht (15) des Laserschweißens ausgebildet ist zwischen zwei gekoppelten Bauteilen ausschließlich aus den chemischen Elementen der Stahlgüten der zwei Bauteile sowie aus den chemischen Elementen der Korrosionsschutzschicht besteht.

8. Türring (1) nach einem der vorgenannten Ansprüche, **dadurch gekennzeichnet, dass** kleiner 20 mm, besonders bevorzugt kleiner 15 mm und ganz besonders bevorzugt kleiner 10 mm ist.

9. Türring (1) nach einem der vorgenannten Ansprüche, **dadurch gekennzeichnet, dass** im Bereich der Überlappung eine schräge Schweißwurzel zwischen den beiden sich überlappenden Teilen eingebracht ist.

10. Türring (1) nach einem der vorgenannten Ansprüche, **dadurch gekennzeichnet, dass** im Bereich der Überlappung die Schweißnaht von beiden Bauteilkanten bzw. eine im Querschnitt geradlinige Schweißwurzel eingebracht ist, welche senkrecht zu der Überlappung orientiert verläuft.

11. Türring (1) nach einem der vorgenannten Ansprüche, **dadurch gekennzeichnet, dass** die Schweißwurzel im Querschnitt weniger als 90 % des zweiten Bauteils durchgreift.

12. Türring (1) nach einem der vorgenannten Ansprüche, **dadurch gekennzeichnet, dass** die Schweißnaht über zweier gekoppelter Bauteile mindestens 60 %, bevorzugt mindestens 70 %, insbesondere 80 % der Gesamtquerschnittlänge/Abwicklungslänge beträgt.

## Claims

1. Door ring (1) for a motor vehicle body, comprising individual components coupled to one another in the form of an A-pillar (2), a B-pillar (4), a roof frame part (3), and a sill part (5), wherein a tensile strength Rm greater than 1300 MPa is formed in at least one region and a tensile strength Rm less than 1000 MPa is formed in another region, wherein the door ring (1) has a corrosion protection layer, wherein the components in the regions comprise at least two different steel grades and are laser-welded with an overlap, **characterized in that** the corrosion protection layer is formed between the overlapping layers (9, 11) and that the overlap is less than 25 mm.

2. Door ring (1) according to claim 1, **characterized in that** at least one of the coupled components of the door ring (1) is manufactured as a hot-formed and press-hardened component, in particular in a single press stroke.

3. Door ring (1) according to claim 1 or 2, **characterized in that** a high-strength region has a tensile strength Rm greater than or equal to 1800 MPa.

4. Door ring (1) according to one of the preceding claims, **characterized in that** soft regions are formed which have a tensile strength Rm of less than 1000 MPa, preferably less than 850 MPa, and/or that the soft regions have a smaller wall thickness.

5. Door ring (1) according to one of the preceding claims, **characterized in that** the corrosion protection layer is formed on an AlSiFe basis or that the corrosion protection layer is formed on a Zn basis.

6. Door ring (1) according to one of the preceding claims, **characterized in that** the individual components are laser-welded to form the door ring.

7. Door ring (1) according to one of the preceding claims, **characterized in that** the weld seam (15) of the laser welding formed between two coupled components consists exclusively of the chemical elements of the steel grades of the two components as well as of the chemical elements of the corrosion protection layer.

8. Door ring (1) according to one of the preceding claims, **characterized in that** the overlap is less than 20 mm, particularly preferably less than 15 mm, and most preferably less than 10 mm.

9. Door ring (1) according to one of the preceding claims, **characterized in that**, in the region of the overlap, an inclined weld root is introduced between the two overlapping parts.

10. Door ring (1) according to one of the preceding claims, **characterized in that**, in the region of the overlap, the weld seam is introduced from both component edges, or that a weld root that is straight in cross-section is introduced, which extends perpendicular to the overlap.

11. Door ring (1) according to one of the preceding claims, **characterized in that** the weld root penetrates less than 90% of the second component in cross-section.

12. Door ring (1) according to one of the preceding claims, **characterized in that** the weld seam between two coupled components extends over at least 60%, preferably at least 70%, in particular 80% of the total cross-sectional length / developed length.

## Revendications

1. Anneau de porte (1) pour une carrosserie de véhicule automobile, comprenant des éléments individuels couplés entre eux sous la forme d'un montant A (2), d'un montant B (4), d'une partie de cadre de toit (3) et d'une partie de seuil (5), une résistance à la traction Rm supérieure à 1300 MPa étant réalisée dans au moins une zone et une résistance à la traction Rm inférieure à 1000 MPa étant réalisée dans une autre zone, l'anneau de porte (1) présentant une couche de protection contre la corrosion, les éléments comprenant dans lesdites zones au moins deux qualités d'acier différentes et étant soudés par laser avec recouvrement, **caractérisé en ce que** la couche de protection contre la corrosion est disposée entre les couches en recouvrement (9, 11) et **en ce que** le recouvrement est inférieur à 25 mm.

2. Anneau de porte (1) selon la revendication 1, **caractérisé en ce qu'**au moins l'un des éléments couplés de l'anneau de porte (1) est réalisé comme pièce formée à chaud et trempée à la presse, notamment en un seul coup de presse.

3. Anneau de porte (1) selon la revendication 1 ou 2, **caractérisé en ce qu'**une zone à haute résistance présente une résistance à la traction Rm supérieure ou égale à 1800 MPa.

4. Anneau de porte (1) selon l'une des revendications précédentes, **caractérisé en ce que** des zones souples sont prévues, présentant une résistance à la traction Rm inférieure à 1000 MPa, de préférence inférieure à 850 MPa, et/ou **en ce que** les zones souples présentent une épaisseur de paroi plus faible.

5. Anneau de porte (1) selon l'une des revendications précédentes, **caractérisé en ce que** la couche de protection contre la corrosion est réalisée sur une base AISiFe ou sur une base Zn.

6. Anneau de porte (1) selon l'une des revendications précédentes, **caractérisé en ce que** les éléments individuels sont soudés par laser pour former l'anneau de porte.

7. Anneau de porte (1) selon l'une des revendications précédentes, **caractérisé en ce que** le cordon de soudure (15) issu du soudage laser entre deux éléments couplés est constitué exclusivement des éléments chimiques des qualités d'acier des deux éléments ainsi que des éléments chimiques de la couche de protection contre la corrosion.

8. Anneau de porte (1) selon l'une des revendications précédentes, **caractérisé en ce que** le recouvrement est inférieur à 20 mm, de préférence inférieur à 15 mm, et de manière particulièrement préférée inférieur à 10 mm.

9. Anneau de porte (1) selon l'une des revendications précédentes, **caractérisé en ce que**, dans la zone de recouvrement, une racine de soudure inclinée est réalisée entre les deux éléments en recouvrement.

10. Anneau de porte (1) selon l'une des revendications précédentes, **caractérisé en ce que**, dans la zone de recouvrement, le cordon de soudure est réalisé à partir des deux bords des éléments, ou bien qu'une racine de soudure rectiligne en section est réalisée, s'étendant perpendiculairement au recouvrement.

11. Anneau de porte (1) selon l'une des revendications précédentes, **caractérisé en ce que** la racine de soudure traverse moins de 90 % du second élément en section.

12. Anneau de porte (1) selon l'une des revendications précédentes, **caractérisé en ce que** le cordon de soudure entre deux éléments couplés s'étend sur au moins 60 %, de préférence au moins 70 %, en particulier 80 % de la longueur totale de section / longueur développée.
